# EUROPÄISCHE PATENTSCHRIFT

(11) **EP 4 190 591 B1**
(45) Veröffentlichungstag und Bekanntmachung des Hinweises auf die Patenterteilung: **28.01.2026**
(21) Anmeldenummer: 22201813.7
(22) Anmeldetag: 17.10.2022
(51) Int. Cl.: B60C 9/07, B60C 9/17, B60C 19/00

(54) **FAHRZEUGLUFTREIFEN FÜR GERÄUSCHARMES FAHREN**
PNEUMATIC VEHICLE TYRE FOR SILENT DRIVING
PNEU DE VÉHICULE POUR CONDUITE À FAIBLE BRUIT

(30) Priorität: 03.12.2021 DE 102021213748
(43) Veröffentlichungstag der Anmeldung: 07.06.2023
(73) Patentinhaber: Continental Reifen Deutschland GmbH, 30175 Hannover (DE)
(72) Erfinder: Berger, Christoph, 30165 Hannover (DE); Ahmed, Owais, 30165 Hannover (DE); Funk-Friedek, Sascha, 30165 Hannover (DE); Wenckel, Mathias, 30165 Hannover (DE); Marschler, Christian, 30165 Hannover (DE)
(74) Vertreter: Continental Corporation

(56) Entgegenhaltungen:
- EP-A1- 2 794 244
- EP-A1- 3 895 908
- EP-A1- 3 904 118
- DE-A1- 102018 214 951
- DE-C- 975 379
- DE-T5- 112017 002 418
- DE-T5- 112017 002 439
- JP-A- 2005 022 537
- KR-A- 20210 002 910
- US-A- 3 327 753
- US-A- 3 327 763
- US-A- 3 568 749
- US-A1- 2019 152 262

## Beschreibung

Die Erfindung betrifft einen Fahrzeugluftreifen, welcher beim Einsatz an einem Fahrzeug zu einer geringen Geräuschentwicklung führt.

Der Gegenstand der Erfindung ist in den beigefügten Ansprüchen definiert.

Im Zuge eines steigenden Bewusstseins für ein nachhaltigeres Wirtschaften besteht ein fortgesetztes Bedürfnis danach, die Auswirkungen des Straßenverkehrs auf die Umwelt zu minimieren. Neben dem Verbrauch an Treibstoffen und der damit verbundenen Emission von Treibhausgasen kommt dabei auch der von Fahrzeugen im Betrieb verursachten Geräuschbelastung eine zentrale Rolle zu. Einen wichtigen Beitrag zur Lösung dieses Problems können dabei moderne Fahrzeugreifen liefern, die die Kontakteigenschaften des Fahrzeugs mit der Fahrbahn maßgeblich beeinflussen und die Geräuschentwicklung in erheblichen Umfang beeinflussen können.

Aus dem Stand der Technik ist bekannt, dass die Geräuschentwicklung beim Betrieb von Fahrzeugreifen zumeist besonders niedrig ist, wenn Fahrzeugreifen mit einer hohen Gesamtmasse eingesetzt werden, die beispielsweise über zusätzliche Gummilagen verfügen, welche beispielsweise als Gürtellagen zwischen der Karkasse und dem Laufstreifen angeordnet werden können. Das erhöhte Gewicht entsprechender Fahrzeugreifen wird jedoch in vielen Fällen mit Blick auf den Energieverbrauch beim Fahren als nachteilig empfunden, wobei auch andere Reifeneigenschaften, beispielsweise der Rollwiderstand des Reifens, durch die Erhöhung der Reifenmasse nachteilig beeinflusst werden können. Grundsätzlich besteht somit ein Bedürfnis danach, möglichst leichte Fahrzeugreifen zu konstruieren, die beispielsweise ohne den Einsatz von zusätzlichen Gürtellagen auskommen.

Vor diesem Hintergrund ist dem Fachmann bewusst, dass ein Zielkonflikt zwischen dem Gewicht eines Reifens und dem damit verbundenen Kraftstoffverbrauch auf der einen Seite und dem Bedürfnis nach einem geräuscharmen Betrieb des Fahrzeuges auf der anderen Seite besteht. Dieser Zielkonflikt wird zusätzlich dadurch verschärft, dass die regelmäßig zur Verringerung der Geräuschentwicklung eingesetzten Gürtellagen in vielen Fällen auch einen wichtigen Beitrag zu der mechanischen Stabilität des Fahrzeugreifens liefern, sodass für leichtere Fahrzeugreifen, die ohne den Einsatz von Gürtellagen auskommen, zudem die Aufgabe besteht, die für die jeweiligen Anwendungen benötigten mechanischen Eigenschaften ohne entsprechende Gürtellagen zu realisieren.

Ein Reifen, bei dem eine Minderung möglicher Geräusche und zugleich ein möglichst geringer Einfluss auf andere Reifeneigenschaften realisiert werden sollte, ist in der DE 102018214951 A1 offenbart. Weiterer Stand der Technik ist in der DE 112017002439 T5, der DE 112017002418 T5, der DE 975379 C, der US 3568749 A, JP 2005022537 A, der EP3904118 A1, der KR 20210002910 A, der US 2019/152262 A1, der EP 3895908 A1 und der EP 2794244 A1 sowie der US 3327753 A offenbart.

Die primäre Aufgabe der vorliegenden Erfindung war es, die aus dem Stand der Technik bekannten Nachteile auszuräumen oder zumindest zu verringern.

Insoweit war es die Aufgabe der vorliegenden Erfindung, den vorstehend beschriebenen Zielkonflikt zwischen der Masse des Reifens und der im Betrieb auftretenden Geräuschentwicklung zu optimieren.

Dabei war es eine Aufgabe der vorliegenden Erfindung, einen Fahrzeugluftreifen anzugeben, der trotz eines geringen Gewichts über ausgezeichnete mechanische Eigenschaften verfügt und insbesondere auch für anspruchsvolle Anwendungen, beispielsweise im Hochgeschwindigkeitsbereich, geeignet ist.

Hierbei war es eine Vorgabe für die vorliegende Erfindung, dass der anzugebende Fahrzeugluftreifen ohne den Einsatz von zusätzlichen Gürtellagen die vorstehend beschriebenen vorteilhaften Eigenschaften aufweist.

Es war eine ergänzende Aufgabe der vorliegenden Erfindung, dass der anzugebende Fahrzeugluftreifen in einfacher Weise und unter Verwendung solcher Gerätschaften und Materialien herstellbar sein sollten, die in der Reifenindustrie bereits regelmäßig zum Einsatz kommen.

Es war eine ergänzende Aufgabe der vorliegenden Erfindung, dass die anzugebenden Fahrzeugluftreifen für eine breite Anzahl von Fahrzeugtypen geeignet sein sollten und hinsichtlich der eingesetzten Materialien eine hohe Flexibilität aufweisen sollen.

Die Erfinder der vorliegenden Erfindung haben nunmehr erkannt, dass sich die vorstehend beschriebenen Aufgaben überraschenderweise lösen lassen, wenn bei der Konstruktion der Karkasse in dem typischerweise unter dem Laufstreifen angeordneten Zentralbereich von einem streng radialen Aufbau abgewichen wird und in diesem Bereich zusätzlich eine separate Dämpfungslage unterhalb der Reifenkarkasse angeordnet wird, wie es in den Ansprüchen definiert ist.

Durch die Kombination dieser konstruktiven Maßnahmen ist es in synergistischer Weise möglich, den Zielkonflikt zwischen einem möglichst optimierten Gewicht des Fahrzeugluftreifens und einer niedrigen Geräuschentwicklung zu lösen, wobei durch die Kombination der gewinkelten Karkasse mit der unterhalb der Karkasse angeordneten Dämpfungslage vorteilhafterweise ein Fahrzeugluftreifen erhalten wird, welcher über ausgezeichnete mechanische Eigenschaften verfügt und auch ohne den Einsatz zusätzlicher Gürtelbandagen zwischen der Reifenkarkasse und dem Laufstreifen auch für anspruchsvolle Anwendungen geeignet ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen, umfassend:
a) eine Reifenkarkasse mit einem ersten Seitenbereich, einem zweiten Seitenbereich und einem dazwischen angeordneten Zentralbereich, umfassend zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken,
b) einen relativ zur Reifenkarkasse radial außenliegenden Laufstreifen,
c) eine relativ zur Reifenkarkasse radial innenliegende Reifeninnenschicht, und
d) eine relativ zur Reifenkarkasse radial innenliegende Dämpfungslage, umfassend einen Gummiwerkstoff, wobei die Dämpfungslage zwischen der Reifenkarkasse und der Reifeninnenschicht angeordnet ist, oder wobei die Dämpfungslage auf der radial innenliegenden Seite der Reifeninnenschicht angeordnet ist,

dadurch gekennzeichnet, dass der Laufstreifen unmittelbar auf der radial außenliegenden Seite der Reifenkarkasse angeordnet ist,
wobei zumindest ein Teil der gummierten Festigkeitsträger der Karkasslage bezogen auf die Umfangsrichtung des Fahrzeugluftreifens im ersten Seitenbereich und im zweiten Seitenbereich einen Winkel im Bereich von 80° bis 90° und im Zentralbereich einen Winkel im Bereich von 5° bis 75° aufweist.

Fahrzeugluftreifen sind dem Fachmann in ihrem prinzipiellen Aufbau bekannt und umfassen regelmäßig eine Reifenkarkasse. Entsprechende Reifenkarkassen werden dabei aus ein oder mehreren Karkasslagen geformt, die jeweils eine Vielzahl von gummierten, das heißt in einer vernetzten Kautschukmischung eingebetteten, Festigkeitsträgern umfassen. Bevorzugt ist insoweit prinzipiell ein erfindungsgemäßer Fahrzeugluftreifen, wobei der Fahrzeugluftreifen ein PKW-Reifen ist.

**In** Übereinstimmung mit dem fachmännischen Verständnis handelt es sich bei den regelmäßig rotationssymmetrischen Fahrzeugluftreifen um Produkte, deren Aufbau zweckmäßigerweise relativ zu der radialen Richtung beschrieben wird, d.h. der von der Mitte des Fahrzeugluftreifens radial nach außen weisenden Richtung, sodass die radiale Richtung zumeist senkrecht auf der Rotationsachse des Fahrzeugluftreifens steht.

Der Fahrzeugluftreifen weist als äußere Schicht, d.h. radial außen liegend, einen Laufstreifen auf, welcher in Abhängigkeit von der vorgesehenen Verwendung ausgelegt und gegebenenfalls mit einem Profil versehen werden kann. Bevorzugt ist dabei regelmäßig ein erfindungsgemäßer Fahrzeugluftreifen, wobei der Laufstreifen auf der radial außenliegenden Oberfläche ein Profil aufweist.

Unterhalb der Reifenkarkasse, d.h. radial innen liegend umfasst der Fahrzeugluftreifen eine Reifeninnenschicht. Entsprechende Reifeninnenschichten sind dem Fachmann geläufig und dienen regelmäßig dazu, das Innere des Fahrzeugluftreifens luftdicht zu verschließen. Regelmäßig bevorzugt ist entsprechend ein erfindungsgemäßer Fahrzeugluftreifen, wobei die radial innenliegende Seite der Reifenkarkasse zumindest teilweise von der Reifeninnenschicht bedeckt ist.

Eine weitere relevante Bezugsrichtung, mit der der Fachmann regelmäßig den Aufbau entsprechender Fahrzeugluftreifen beschreibt, ist die Umfangsrichtung des Fahrzeugluftreifens. **In** Übereinstimmung mit dem fachmännischen Verständnis handelt es sich hierbei an jedem Punkt des Kreisumfanges um die jeweilige Kreistangente, die mit der radialen Richtung, d.h. der Verbindung zwischen dem jeweiligen Punkt und dem Mittelpunkt des Reifens einen rechten Winkel einschließt.

In herkömmlichen Radialreifen verlaufen die gummierten Festigkeitsträger der der Karkasslagen im Wesentlichen radial. Dies bedeutet, dass die gummierten Festigkeitsträger über die gesamte Breite der Karkasse quer zur Umfangsrichtung des Fahrzeugluftreifens mit der Umfangsrichtung einen Winkel von etwa 90° einschließen. Entsprechend liegt in einem herkömmlichen Radialreifen jeder gummierte Festigkeitsträger in der Draufsicht auf den Fahrzeugluftreifen im Wesentlichen im gleichen Kreisabschnitt. Die entsprechende Größe wird vom Fachmann auch als der sogenannte Kordwinkel der in der Karkasslage vorhandenen Festigkeitsträger bezeichnet. Auch wenn die Definition dieser Kordwinkel in Abhängigkeit von der Umfangsrichtung auf den ersten Blick umständlich erscheinen mag, ist es für den Fachmann in der Praxis zwanglos möglich, den Kordwinkel, d.h. den relativen Winkel des Festigkeitsträgers zur Umfangsrichtung, zu bestimmen.

In dem erfindungsgemäßen Fahrzeugluftreifen wird die Karkasse nunmehr in zumindest drei theoretische Bereiche unterteilt, nämlich den ersten Seitenbereich, den Zentralbereich und den zweiten Seitenbereich. Hierbei kann der Zentralbereich zweckmäßigerweise der Bereich der Reifenkarkasse sein, der im Fahrzeugluftreifen unterhalb des Laufstreifens angeordnet ist, wohingegen der erste und zweite Seitenbereich beispielsweise die Karkasse im Bereich der Flanken des Fahrzeugluftreifens bilden. Erfindungsgemäß wird im Fahrzeugluftreifen nämlich von der streng radialen Konstruktion abgewichen, indem nämlich lediglich in dem ersten und zweiten Seitenbereich eine weitgehend radiale Anordnung der Festigkeitsträger, d.h. mit einem Kordwinkel von 80° bis 90°, eingestellt wird. Innerhalb des Zentralbereichs der Karkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann.

Darüber hinaus wird in erfindungsgemäßen Fahrzeugluftreifen jedoch zudem eine spezifische Dämpfungslage vorgesehen, die relativ zur Reifenkarkasse radial innen liegend angeordnet ist, und somit auf der Seite der Reifenkarkasse liegt, die im späteren Betrieb im Inneren des Fahrzeugluftreifens liegt. Durch die erfindungsgemäße Kombination der spezifischen Führung der gummierten Festigkeitsträger in der Reifenkarkasse mit einer separaten Dämpfungslage ist es vorteilhafterweise möglich, die vorstehend beschriebenen Zielkonflikte in ausgezeichneter Weise zu lösen und dabei Fahrzeugluftreifen zu erhalten, welche über hervorragende mechanische Eigenschaften verfügen, die auch den Einsatz in verschiedenen Hochleistungsanwendungen ermöglichen.

Nach Einschätzung der Erfinder ist es besonders vorteilhaft, wenn die Gummierung der Festigkeitsträger mit einem anderen Werkstoff erfolgt als die Dämpfung mittels der Dämpfungslage, da der Einsatz unterschiedlicher Materialien eine Optimierung der mechanischen Reifeneigenschaften über die Karkasslage bei einer gleichzeitig optimierten Geräuschemission ermöglicht. Bevorzugt ist daher ein erfindungsgemäßer Fahrzeugluftreifen, wobei die gummierten Festigkeitsträger in der zumindest einen Karkasslage von einem Gummierungswerkstoff umgeben sind, wobei der Gummierungswerkstoff und der Gummiwerkstoff voneinander verschieden sind, wobei der Gummierungswerkstoff und der Gummiwerkstoff bevorzugt einen unterschiedlichen E-Modul aufweisen.

Als Gummierungswerkstoffe beziehungsweise Gummiwerkstoffe für die Dämpfungslage sowie als Materialien für den Laufstreifen und die Reifeninnenschicht können vorteilhafterweise die im Bereich der Reifenfertigung üblichen Materialien eingesetzt werden, die vorteilhafterweise mittels Vulkanisation aus vulkanisierbaren Kautschukmischungen erhalten werden können. In den meisten Fällen bevorzugt ist dabei ein erfindungsgemäßer Fahrzeugluftreifen, wobei der Gummiwerkstoff der Dämpfungslage und/oder der Gummierungswerkstoff der Karkasslage herstellbar ist durch Vulkanisation einer vulkanisierbaren Kautschukmischung, wobei die vulkanisierbare Kautschukmischung bevorzugt zumindest einen Dienkautschuk und zumindest einen Füllstoff umfasst.

Auch wenn sich bereits durch eine lediglich teilweise schräge Ausrichtung der Festigkeitsträger in der Karkasslage eine Verbesserung der mechanischen Eigenschaften und eine Einsparung an Gewicht bei gleichzeitigen guten Geräuscheigenschaften realisieren lässt, ist es nach Einschätzung der Erfinder vorteilhaft, wenn sämtliche Festigkeitsträger in der Karkasslage den vorstehend definierten Verlauf nachvollziehen, was zielführenderweise dadurch erreicht werden kann, dass die Festigkeitsträger in der Karkasslage im Wesentlichen parallel zueinander verlaufen. Bevorzugt ist somit ein erfindungsgemäßer Fahrzeugluftreifen, wobei die gummierten Festigkeitsträger in der zumindest einen Karkasslage, bevorzugt sämtlicher Karkasslagen, innerhalb der Karkasslage im Wesentlichen parallel zueinander verlaufen. Bevorzugt ist entsprechend auch ein erfindungsgemäßer Fahrzeugluftreifen, wobei sämtliche der gummierten Festigkeitsträger der Karkasslage bezogen auf die Umfangsrichtung des Fahrzeugluftreifens im ersten Seitenbereich und im zweiten Seitenbereich einen Winkel im Bereich von 80° bis 90° und im Zentralbereich einen Winkel im Bereich von 5° bis 75° aufweisen.

Prinzipiell ist es möglich, die Dämpfungslage auf verschiedene Weisen auszuführen, wobei diese zumindest prinzipiell auch eigene Festigkeitsträger umfassen könnte. Nach Einschätzung der Erfinder ist es jedoch zielführend, die innen liegende Dämpfungslage im Wesentlichen vollständig aus dem Gummiwerkstoff auszuführen und insbesondere auch von Festigkeitsträgern im Material abzusehen. Der Einfluss von Festigkeitsträgern in diesem Material auf die mechanischen Eigenschaften des Fahrzeugluftreifens wäre nach Einschätzung der Erfinder in den meisten Fällen zu gering, um die Beeinträchtigung der Dämpfungswirkung des Gummiwerkstoffs bzw. die Erhöhung des Gewichts zu rechtfertigen. Bevorzugt ist daher ein erfindungsgemäßer Fahrzeugluftreifen, wobei die radial innenliegende Dämpfungslage aus dem Gummiwerkstoff besteht, und/oder wobei die Dämpfungslage keine Festigkeitsträger umfasst.

Zumindest grundsätzlich wäre es denkbar, die Dämpfungslage nur an Teilen des Reifens vorzusehen beziehungsweise eine segmentierte Dämpfungslage einzusetzen. Mit Blick auf die erreichbare Reduktion der Geräuschemission ist dies jedoch ebenso wenig bevorzugt, wie mit Blick auf die leichte Herstellbarkeit entsprechender Fahrzeugluftreifen. Bevorzugt ist entsprechend ein erfindungsgemäßer Fahrzeugluftreifen, wobei die radial innenliegende Dämpfungslage über den gesamten Umfang des Fahrzeugluftreifens verläuft. Dem Fachmann ist dabei bewusst, dass er bei der Platzierung der Dämpfungslage im Fahrzeugluftreifen in den meisten Fällen eine ungewollte Unwucht vermeiden sollte.

Die Erfinder konnten im Zuge der eigenen Entwicklung besonders geeignete Dickenbereiche für die Dämpfungslage identifizieren. Bevorzugt ist nämlich ein erfindungsgemäßer Fahrzeugluftreifen, wobei die radial innenliegende Dämpfungslage in radiale Richtung eine Dicke im Bereich von 0,5 bis 5,0 mm, bevorzugt im Bereich von 1,0 bis 2,0 mm aufweist.

Für die meisten Anwendungen wird es zweckmäßig sein, eine durchgehende Dämpfungslage unterhalb der Reifenkarkasse anzuordnen, die sich beispielsweise unterhalb der gesamten im Normalbetrieb vorgesehenen Auflagefläche des Fahrzeugluftreifens erstreckt. Alternativ ist es jedoch auch möglich, zwei oder mehr Dämpfungslagen vorzusehen, die dann zweckmäßigerweise als ringförmiges Gebilde räumlich voneinander beabstandet unterhalb der Reifenkarkasse verlaufen. Hierdurch ist es vorteilhafterweise möglich, die Dämpfungseigenschaften spezifisch auf den verwendeten Laufstreifen einzustellen, was es insbesondere beim Einsatz von mehrkomponentigen Laufstreifen mit unterschiedlichen Laufstreifenmischungen vorteilhafterweise erlaubt, das Gewicht weiter zu minimieren, indem die Dämpfungslagen nur an den Stellen vorgesehen werden, an denen sie den größten Effekt zeigen. Bevorzugt ist vor diesem Hintergrund ein erfindungsgemäßer Fahrzeugluftreifen, wobei der Fahrzeugluftreifen zwei oder mehrere relativ zur Reifenkarkasse radial innenliegende Dämpfungslagen umfasst, wobei die zwei oder mehr radial innenliegenden Dämpfungslagen bevorzugt voneinander beabstandet sind, wobei die zwei oder mehr radial innenliegenden Dämpfungslagen besonders bevorzugt so angeordnet sind, dass die parallel zur Umlaufrichtung durch den Fahrzeugluftreifen verlaufende Symmetrieebene im Wesentlichen nicht aufgebrochen wird.

Über die vorstehend definierten Kordwinkel hinaus ist es den Erfindern der vorliegenden Erfindung gelungen, besonders geeignete Winkel für die Führung der gummierten Festigkeitsträger in den Seitenbereichen beziehungsweise im Zentralbereich zu identifizieren, mit denen sich in Kombination mit der erfindungsgemäß vorgesehenen Dämpfungslage besonders gute Reifeneigenschaften und eine besonders ausgeprägte Geräuschreduktion erzielen lassen. Bevorzugt ist insoweit ein erfindungsgemäßer Fahrzeugluftreifen, wobei zumindest ein Teil der gummierten Festigkeitsträger der Karkasslage bezogen auf die Umfangsrichtung des Fahrzeugluftreifens im ersten Seitenbereich und im zweiten Seitenbereich einen Winkel im Bereich von 85° bis 90°, bevorzugt im Bereich von 88° bis 90°, aufweist, und/oder wobei zumindest ein Teil der gummierten Festigkeitsträger der Karkasslage bezogen auf die Umfangsrichtung des Fahrzeugluftreifens im Zentralbereich einen Winkel im Bereich von 10° bis 70°, bevorzugt im Bereich von 15° bis 55°, besonders bevorzugt im Bereich von 20° bis 35°, aufweist.

Vorteilhafterweise kann die Dämpfungslage im erfindungsgemäßen Fahrzeugluftreifen flexibel positioniert werden. Die Positionierung zwischen der Reifenkarkasse und der Reifeninnenschicht erlaubt es dabei, die Dämpfungslage besonders fest im Reifenverbund zu fixieren, wobei je nach Anordnung zudem einen zusätzlichen Schutz gegen eine ungewollte Perforation der Reifeninnenschicht erhalten werden kann. Alternativ oder zusätzlich kann die Dämpfungslage auch auf die Reifeninnenschicht appliziert werden, sodass sie gegenüber der Reifeninnenschicht radial innen liegt. Diese Ausgestaltung ist fertigungstechnisch häufig leichter zu handhaben und erlaubt auch eine nachträgliche Ausrüstung zuvor gefertigter Fahrzeugreifen mit einer entsprechenden Dämpfungslage. Erfindungsgemäß ist somit ein Fahrzeugluftreifen wobei die Dämpfungslage zwischen der Reifenkarkasse und der Reifeninnenschicht angeordnet ist, und/oder wobei die Dämpfungslage auf der radial innenliegenden Seite der Reifeninnenschicht angeordnet ist. Aus den vorstehenden Ausführungen folgt, dass in besonders bevorzugten Ausgestaltungen auch zwei oder mehr Dämpfungslagen vorgesehen werden können, die auch an unterschiedlichen Stellen im Fahrzeugluftreifen platziert werden. Bevorzugt ist daher ein erfindungsgemäßer Fahrzeugluftreifen, wobei der Fahrzeugluftreifen zwei oder mehrere relativ zur Reifenkarkasse radial innenliegende Dämpfungslagen umfasst.

Vorteilhafterweise und erfindungsgemäß ist es mit den erfindungsgemäßen Fahrzeugluftreifen möglich, ohne den Einsatz von zusätzlichen Lagen, beispielsweise Gürtellagen, welche zwischen dem Laufstreifen und der Reifenkarkasse angeordnet werden, gute mechanische Eigenschaften zu erzielen. Trotzdem kann es für bestimmte, nicht-erfindungsgemäße Anwendungen vorteilhaft sein, zwischen der Reifenkarkasse und dem Laufstreifen weitere Lagen vorzusehen, beispielsweise um den Fahrzeugluftreifen hinsichtlich der Geräuschentwicklung weiter zu dämpfen und/oder die mechanischen Eigenschaften weiter zu optimieren. Nach Einschätzung der Erfinder ist es hierbei jedoch zur Lösung des vorstehend beschriebenen Zielkonfliktes optimal, wenn beim Einsatz von weiteren Lagen in nicht erfindungsgemäßen Fahrzeugluftreifen auch nur genau eine weitere Lage verwendet wird. Neben der nachteiligen Beeinflussung des Reifengewichts ergibt sich beim Einsatz von mehreren weiteren Lagen sonst gegebenenfalls die Situation, dass die mittels der Dämpfungslage zu erzielende relative Geräuschreduktion den Gewichtszuwachs durch die Dämpfungslage nicht mehr hinreichend rechtfertigt. Denkbar ist daher ein nicht erfindungsgemäßer Fahrzeugluftreifen, wobei im Fahrzeugluftreifen zwischen dem Laufstreifen und der Reifenkarkasse zumindest eine weitere Lage, bevorzugt genau eine weitere Lage, angeordnet ist.

Als weitere Lagen kommen insbesondere Gürtellagen, deren Festigkeitsträger bevorzugt ebenfalls schräg zur Umfangsrichtung des Fahrzeugluftreifens verlaufen oder sogenannte "Cap-Ply"-Lagen infrage, deren Festigkeitsträger im Wesentlichen parallel zur Umfangsrichtung des Fahrzeugluftreifens verlaufen. Bevorzugt ist daher ein wie vorstehend offenbarter, nicht erfindungsgemäßer Fahrzeugluftreifen, wobei zumindest eine der weiteren Lage eine Gürtellage ist, wobei die weitere Lage bevorzugt gummierte Festigkeitsträger umfasst, die besonders bevorzugt bezogen auf die Umfangsrichtung des Fahrzeugluftreifens einen Winkel im Bereich von 10° bis 70°, weiter bevorzugt im Bereich von 15° bis 55°, noch weiter bevorzugt im Bereich von 20° bis 35°, aufweisen. Bevorzugt ist zusätzlich oder alternativ ein wie vorstehend offenbarter, nicht erfindungsgemäßer Fahrzeugluftreifen, wobei zumindest eine der weiteren Lage eine Cap-Ply Lage ist, wobei die weitere Lage bevorzugt gummierte Festigkeitsträger umfasst, die besonders bevorzugt bezogen auf die Umfangsrichtung des Fahrzeugluftreifens einen Winkel im Bereich von 0° bis 5° aufweisen.

Aus den vorstehenden Ausführungen ist ersichtlich, dass nach Einschätzung der Erfinder solche erfindungsgemäßen Fahrzeugluftreifen besonders vorteilhaft sind, bei denen keine zusätzlichen Lagen eingesetzt werden, sodass der Laufstreifen unmittelbar auf der Reifenkarkasse aufgebracht wird. Erfindungsgemäß ist deshalb ein Fahrzeugluftreifen, wobei der Laufstreifen unmittelbar auf der radial außenliegenden Seite der Reifenkarkasse angeordnet ist.

Mit Blick auf eine optimale Geräuschreduktion und eine Optimierung der mechanischen Eigenschaften des Fahrzeugluftreifens ist es nach Einschätzung der Erfinder zielführend, den Laufstreifen in radialer Richtung oberhalb des Zentralbereichs anzuordnen, d.h. oberhalb des Bereiches, in dem die gummierten Festigkeitsträger einen niedrigeren Kordwinkel aufweisen. In einer besonders bevorzugten Ausführungsform, die nach Einschätzung der Erfinder zu besonders günstigem Dämpfungsverhalten führt, wird auch die Dämpfungslage unterhalb des Zentralbereiches angeordnet, sodass sich in besonders bevorzugten Ausgestaltungen zumindest teilweise eine Schichtstruktur aus Laufstreifen, Zentralbereich der Reifenkarkasse und Dämpfungslage ergibt. Bevorzugt ist somit ein erfindungsgemäßer Fahrzeugluftreifen, wobei der Laufstreifen in radial nach außen weisender Richtung zumindest teilweise, bevorzugt vollständig, oberhalb des Zentralbereichs angeordnet ist, und/oder wobei die Dämpfungslage in radial nach außen weisender Richtung zumindest teilweise, bevorzugt vollständig, unterhalb des Zentralbereichs angeordnet ist.

Grundsätzlich ist der erfindungsgemäße Fahrzeugluftreifen hinsichtlich der einzusetzenden Festigkeitsträger flexibel. Nach Einschätzung der Erfinder sind jedoch mit Blick auf die benötigten mechanischen Eigenschaften metallische Festigkeitsträger beispielsweise Stahlkorde, für die Karkasslagen bevorzugt. Bevorzugt ist deshalb ein erfindungsgemäßer Fahrzeugluftreifen, wobei die Festigkeitsträger textile Festigkeitsträger oder metallische Festigkeitsträger, bevorzugt metallische Festigkeitsträger, besonders bevorzugt Stahlkorde, sind.

Sofern für bestimmte Anwendungen auf textile Festigkeitsträger zurückgegriffen werden soll, schlagen die Erfinder insoweit besonders geeignete textile Festigkeitsträger vor. Bevorzugt ist nämlich ein erfindungsgemäßer Fahrzeugluftreifen, wobei die gummierten Festigkeitsträger ausgewählt sind aus der Gruppe bestehend aus textilen Festigkeitsträgern mit zumindest einem Garn, wobei das Garn bevorzugt aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), bevorzugt ausgewählt ist aus der Gruppe bestehend aus Aramid und Polyethylenterephthalat.

Den Erfindern ist es gelungen mit Blick auf die Dimensionierung der Dämpfungslage und des Zentralbereichs, d.h. des Bereiches, in dem kleinere Kordwinkel eingesetzt werden, besonders geeignete Größenrelationen zu identifizieren. Die Breite der Aufstandsfläche bezeichnet dabei in Übereinstimmung mit dem fachmännischen Verständnis die Breite des Bereichs, welcher bei Einstellung des für den Betrieb vorgesehenen Normaldrucks an einem durchschnittlichen Fahrzeug mit durchschnittlicher Beladung für den Fahrzeugluftreifen vorgesehen ist. Diese Größe anzugeben ist für den Fachmann in der Praxis kein Problem. Alternativ erlaubt die Definition über die Breite des Laufstreifens, die bei der Herstellung des Fahrzeugluftreifens am aufgebrachten Laufstreifen zwanglos bestimmt werden kann, eine Definition, die im Herstellungsprozess besonders leicht umgesetzt werden kann. Wie vorstehend erläutert, sind die Unterschiede zwischen der Breite der Aufstandsfläche und der Breite des Laufstreifens erfahrungsgemäß eher gering, sodass insoweit grob die gleichen Verhältnisse eingestellt werden können. Bevorzugt ist daher ein erfindungsgemäßer Fahrzeugluftreifen, wobei der Quotient gebildet aus der Breite des Laufstreifens geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt, und/oder wobei der Quotient gebildet aus der Breite der Aufstandsfläche geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt, und/oder wobei der Quotient gebildet aus der Breite der Dämpfungslage geteilt durch die Breite des Zentralbereichs, jeweils quer zur Umfangsrichtung des Fahrzeugluftreifens, im Bereich von 0,6 bis 1,4, bevorzugt im Bereich von 0,7 bis 1,2, besonders bevorzugt im Bereich von 0,8 bis 1,1, ganz besonders bevorzugt im Bereich von 0,9 bis 1,0, liegt.

Auch wenn prinzipiell mit allen Gummiwerkstoffen vielversprechende Dämpfungslagen erhalten werden können, ist es nach Einschätzung der Erfinder besonders zielführend, den E-Modul des als Dämpfungslage verwendeten Gummiwerkstoffs ganz spezifisch einzustellen, wobei sich insbesondere Gummiwerkstoffe im unteren Modul-Bereich als besonders vorteilhaft erwiesen haben. Darüber hinaus ist es den Erfindern gelungen, geeignete Bereiche für die Härte der als Dämpfungslage eingesetzten Gummiwerkstoffe zu identifizieren, mit denen sich neben einer ausgezeichneten Geräuschdämpfung zudem besonders vorteilhafte mechanische Eigenschaften der Fahrzeugluftreifen ergeben. Bevorzugt ist somit ein erfindungsgemäßer Fahrzeugluftreifen, wobei der Gummiwerkstoff der Dämpfungslage einen E-Modul im Bereich von 2 bis 15 MPa, bevorzugt im Bereich von 3 bis 12 MPa, besonders bevorzugt im Bereich von 4 bis 8 MPa, aufweist. Zusätzlich oder alternativ bevorzugt ist ein erfindungsgemäßer Fahrzeugluftreifen, wobei der Gummiwerkstoff der Dämpfungslage eine Shore A Härte von 60 oder weniger, bevorzugt 55 oder weniger, besonders bevorzugt 50 oder weniger aufweist.

Es kann als Vorteil des erfindungsgemäßen Verfahrens gesehen werden, dass in der Reifenkarkasse auch mehrere Karkasslagen eingesetzt werden können. Hierbei ist es jedoch bevorzugt, dass sämtliche eingesetzten Karkasslagen über einen Aufbau verfügen, wie er vorstehend definiert ist, d.h. mit einem schrägen Verlauf im Zentralbereich.

Bevorzugt ist also ein erfindungsgemäßer Fahrzeugluftreifen, wobei die Reifenkarkasse zwei oder mehr Karkasslagen umfasst, wobei in jeder Karkasslage zumindest ein Teil der gummierten Festigkeitsträger, bevorzugt sämtliche gummierten Festigkeitsträger, bezogen auf die Umfangsrichtung des Fahrzeugluftreifens im ersten Seitenbereich und im zweiten Seitenbereich einen Winkel im Bereich von 80° bis 90° und im Zentralbereich einen Winkel im Bereich von 5° bis 75° aufweist.

Beim Einsatz von zwei oder mehr Karkasslagen ist es besonders vorteilhaft, wenn sich die im Zentralbereich relativ zur Umfangsrichtung eingestellten Winkel der gummierten Festigkeitsträger zwischen den Karkasslagen unterscheiden, um so in der Projektion ein Netz bzw. Gitter von gummierten Festigkeitsträgern zu erzeugen. Besonders bevorzugt ist hierbei eine Ausführungsform, bei der die gummierten Festigkeitsträger der beiden Karkasslagen im Wesentlichen umgekehrt zueinander angeordnet sind, sodass sie sich in einem Winkel von nahezu 90° schneiden. Mit dieser Ausführungsform werden insbesondere mit Blick auf die mechanischen Eigenschaften der Fahrzeugluftreifen nach Einschätzung der Erfinder die besten Ergebnisse erzielt. Bevorzugt ist entsprechend ein erfindungsgemäßer Fahrzeugluftreifen, wobei die Reifenkarkasse zumindest zwei Karkasslagen umfasst, wobei die gummierten Festigkeitsträger der beiden Karkasslagen bezogen auf die Umfangsrichtung des Fahrzeugluftreifens im Zentralbereich einen unterschiedlichen Winkel aufweisen, wobei sich der Winkel bevorzugt um mehr als 10°, besonders bevorzugt um mehr als 20° besonders bevorzugt um mehr als 30°, unterscheiden, und/oder wobei die Reifenkarkasse zwei Karkasslagen umfasst, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, aufweisen.

Für die meisten Anwendungen als Fahrzeugluftreifen ist es zweckmäßig, wenn die Fahrzeugluftreifen in den Seitenbereichen, insbesondere an den radial am weitesten innen liegenden Teilen der Reifenkarkasse eine Wulst mit einem Wulstkern aufweisen, welcher beispielsweise als Kabelkern ausgeführt werden kann. Bevorzugt ist insoweit ein erfindungsgemäßer Fahrzeugluftreifen, wobei der erste Seitenbereich und/oder der zweite Seitenbereich der Reifenkarkasse eine Wulst umfassen, bevorzugt umfassend einen Wulstkern, wobei die Karkasslage bevorzugt um die Wulst herum angeordnet ist.

Die Karkasslagen können dabei um diese Wulst herumgeschlagen werden, sodass sich auf beiden Seiten der Karkasse eine Faltung ergibt, die vorliegend als erster Umschlagbereich beziehungsweise zweiter Umschlagbereich bezeichnet wird. In herkömmlichen Radialreifen verlaufen auch die Festigkeitsträger in diesen Umschlagbereichen im Wesentlichen ideal radial. Nach Einschätzung der Erfinder ist es jedoch mit Blick auf die dadurch erreichbare Stabilität der Seitenwand ganz besonders bevorzugt, wenn in den Umschlagsbereichen wiederum ein Kordwinkel eingestellt wird, welcher sich von dem Kordwinkel in den Seitenbereichen unterscheidet, wobei wiederum Kordwinkel besonders bevorzugt sind, wie sich auch im Zentralbereich eingestellt werden. Eine besonders bevorzugte Reifenkarkasse umfasst somit zwei gewinkelte Umschlagbereiche, zwei radiale Seitenbereiche und einen gewinkelten Zentralbereich. Bevorzugt ist demnach ein erfindungsgemäßer Fahrzeugluftreifen, wobei die Reifenkarkasse zusätzlich einen mit dem ersten Seitenbereich verbundenen ersten Umschlagbereich und einen mit dem zweiten Seitenbereich verbundenen zweiten Umschlagbereich umfasst, wobei zumindest ein Teil der gummierten Festigkeitsträger der Karkasslage bezogen auf die Umfangsrichtung des Fahrzeugluftreifens im ersten Seitenbereich und im zweiten Seitenbereich einen Winkel im Bereich von 5° bis 75°, bevorzugt im Bereich von 15° bis 55°, besonders bevorzugt im Bereich von 20° bis 35°, aufweist.

Unabhängig davon, ob die Umschlagbereiche selbst mit einem reduzierten Kordwinkel ausgeführt werden, ist es mit Blick auf die langfristige Haltbarkeit der erfindungsgemäßen Fahrzeugluftreifen explizit bevorzugt, wenn auf den Seitenbereichen der Reifenkarkasse separate Seitenwände angeordnet sind, die die unterliegende Reifenkarkasse gegen Umwelteinflüsse schützen. Bevorzugt ist daher ein erfindungsgemäßer Fahrzeugluftreifen, wobei außen auf dem ersten Seitenbereich und/oder auf dem zweiten Seitenbereich der Reifenkarkasse Seitenwände aus einem Gummiwerkstoff angeordnet sind.

Nachfolgend werden bevorzugte Ausführungsformen der Erfindung unter Bezugnahme auf die beiliegenden Zeichnungen näher erläutert und beschrieben. Dabei zeigen:
- Fig. 1: eine schematische Querschnittsdarstellung eines erfindungsgemäßen Fahrzeugluftreifens in einer ersten Ausführungsform;
- Fig. 2: eine schematische Querschnittsdarstellung eines nicht erfindungsgemäßen Fahrzeugluftreifens in einer zweiten Ausführungsform;
- Fig. 3: eine schematische Querschnittsdarstellung eines erfindungsgemäßen Fahrzeugluftreifens in einer dritten Ausführungsform;
- Fig. 4: eine schematische Querschnittsdarstellung eines nicht erfindungsgemäßen Fahrzeugluftreifens in einer vierten Ausführungsform; und
- Fig. 5: eine schematische Erläuterung des Verlaufs der gummierten Festigkeitsträger in den verschiedenen Bereichen der Reifenkarkasse.

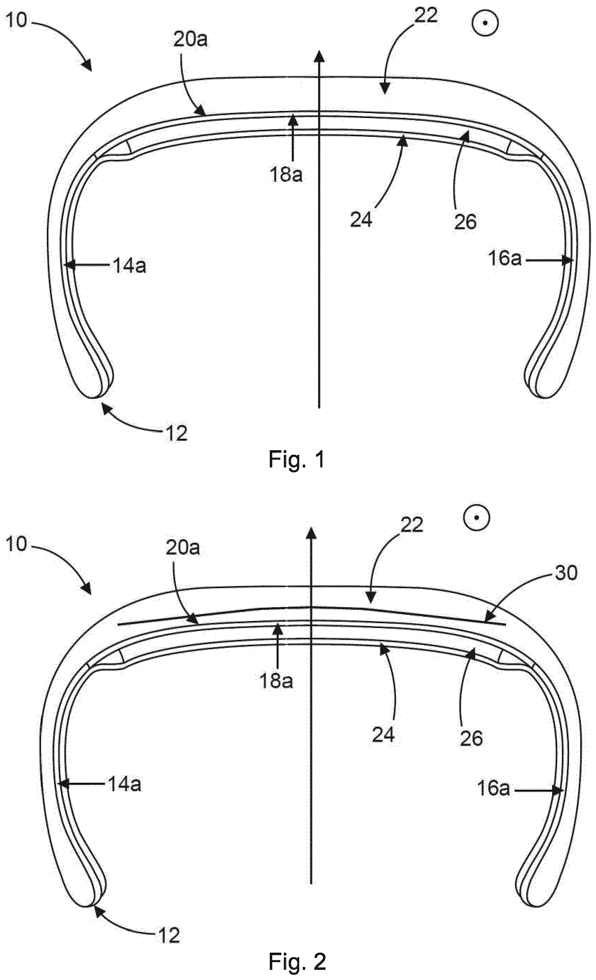

Figur 1 zeigt eine schematische Querschnittsdarstellung eines erfindungsgemäßen Fahrzeugluftreifens 10 in einer bevorzugten Ausführungsform. Hierbei ist die radiale Richtung durch den zentralen Pfeil angezeigt, wohingegen die Umlaufrichtung auf den Betrachter weist. Die Reifenkarkasse 12 umfasst einen ersten Seitenbereich 14a, einen zweiten Seitenbereich 16a und einen dazwischen angeordneten Zentralbereich 18a, wobei sich die einzelne Karkasslage 20a durch diese Bereiche erstreckt. Bei den gummierten Festigkeitsträgern handelt es sich in dem in Figur 1 gezeigten Beispiel um metallische Festigkeitsträger, nämlich Edelstahlkorde.

Oberhalb der Reifenkarkasse 12, d.h. radial außen liegend ist der Laufstreifen 22 angeordnet, wohingegen die Reifeninnenschicht 24 unterhalb der Reifenkarkasse verläuft. Die gummierten Festigkeitsträger 28 der Karkasslage 20a weisen im ersten Seitenbereich 14a und im zweiten Seitenbereich 16a relativ zur Umfangsrichtung des Fahrzeugluftreifens 10 einen Winkel von etwa 89° bis 90° auf. Im Zentralbereich 18a, welcher vorliegend etwa 5% breiter ist, als der Laufstreifen 22 beziehungsweise die vorgesehene Aufstandsfläche, verlaufen die gummierten Festigkeitsträger 28 der Karkasslage 20a relativ zur Umfangsrichtung in einem Winkel von etwa 32 bis 33°.

In der in Figur 1 gezeigten Ausführungsform des erfindungsgemäßen Fahrzeugluftreifens 10 ist die Dämpfungslage 26 zwischen der Reifenkarkasse 12 und der Reifeninnenschicht 24 angeordnet und so platziert, dass sie vollständig unterhalb des Zentralbereichs 18a liegt. In der hier vorgeschlagenen beispielhaften Ausführungsform beträgt der E-Modul des in der Dämpfungslage 26 verarbeiteten Gummiwerkstoffs 5 MPa.

Der in Figur 1 gezeigte erfindungsgemäße Fahrzeugluftreifen 10 ist im Wesentlichen rotationssymmetrisch ausgeführt, sodass sich die gezeigte Dämpfungslage 26 über den gesamten Umfang des Fahrzeugluftreifens 10 erstreckt, sodass sich im Wesentlichen an allen Stellen des Fahrzeugluftreifens 10 der gleiche Querschnitt ergibt.

Die Dämpfungslage 26 besteht in dem gezeigten Beispiel vollständig aus dem Gummiwerkstoff und umfasst keine zusätzlichen Festigkeitsträger. In dem gezeigten Beispiel beträgt die Dicke der Dämpfungslage 26 etwa 1,5 mm, wobei für den Gummiwerkstoff eine Shore-A-Härte von etwa 48 gewählt wird.

Die in Figur 2 gezeigte, nicht erfindungsgemäße Ausführungsform des Fahrzeugluftreifens 10 entspricht weitgehend der in Figur 1 dargestellten Ausführungsform. Der Unterschied besteht darin, dass zwischen dem Laufstreifen 22 und der Reifenkarkasse 12 oberhalb des Zentralbereichs 18a eine weitere Lage 30 angeordnet ist. Bei dieser weiteren Lage 30 kann es sich beispielsweise um eine Gürtellage oder eine Cap-Ply-Lage handeln, die sich vor allem hinsichtlich der Ausrichtung der enthaltenen gummierten Festigkeitsträger relativ zur Umfangsrichtung unterscheiden.

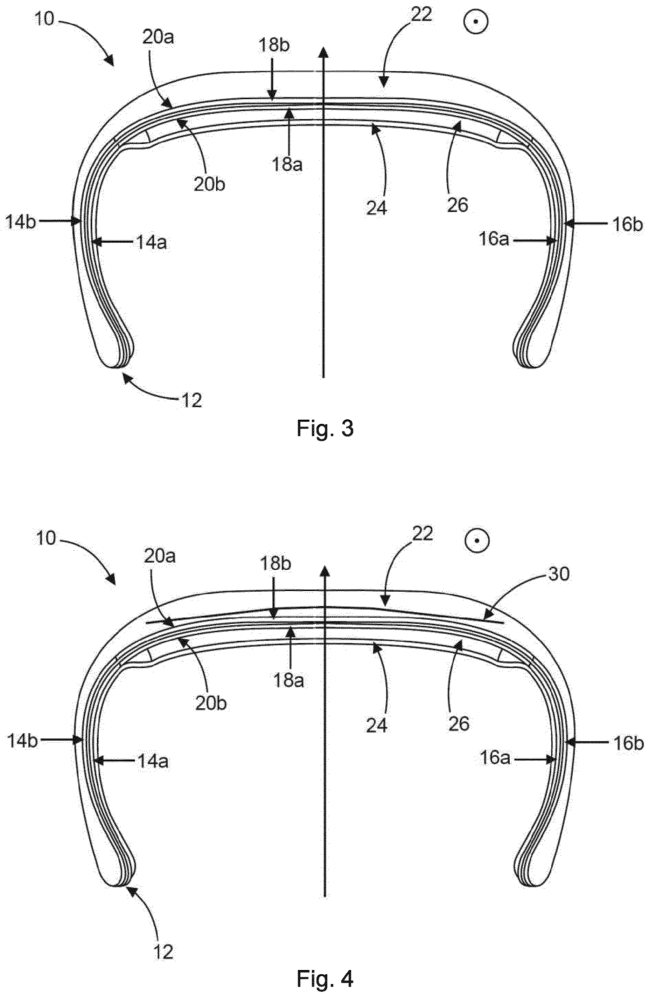

Die Ausführungsformen der Figuren 3 und 4 entsprechen weitgehend den Ausführungsformen der Figuren 1 und 2. Der Unterschied besteht jedoch darin, dass jeweils zwei Karkasslagen 20a, 20b vorgesehen sind, die in den entsprechenden Bereichen der Reifenkarkasse 12 über einen ersten Seitenbereich 14a, 14b, einen zweiten Seitenbereich 16, 16b und einen Zentralbereich 18a, 18b verfügen. In den Seitenbereichen sind die gummierten Festigkeitsträger 28 dabei in beiden Fällen wie vorstehend beschrieben orientiert. Die Ausrichtung der gummierten Festigkeitsträger 28 unterscheidet sich im Zentralbereich 20a, 20b jedoch derart, dass die gummierten Festigkeitsträger im Wesentlichen einen umgekehrten Verlauf aufweisen, sodass sich die textilen Festigkeitsträger 28 der Karkasslagen 20a, 20b in der Draufsicht etwa in einem Winkel von 64° schneiden.

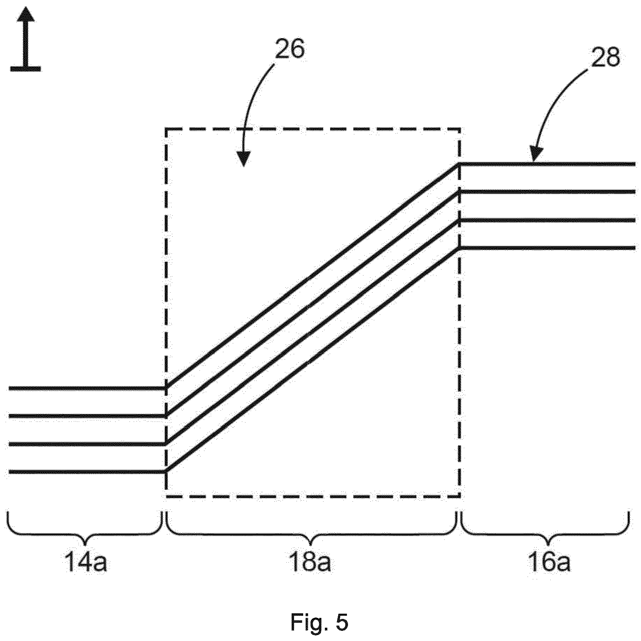

Figur 5 zeigt abschließend eine schematische Erläuterung des Verlaufs der gummierten Festigkeitsträger in einer Reifenkarkasse 12, wie sie bei der Fertigung von Fahrzeugluftreifen 10 beispielsweise vor dem Bombieren der Reifenkarkasse 12 und der Applikation des Laufstreifens 22 vorliegt. Der erste Seitenbereich 14a, der zweite Seitenbereich 16a und der Zentralbereich 18a sind durch geschweifte Klammern kenntlich gemacht. Durch eine Strichelung wird vorliegend angedeutet, in welchem Bereich die Dämpfungslage 26 unterhalb der entsprechenden Reifenkarkasse 12 angeordnet wäre. Die Umlaufrichtung des späteren Fahrzeugluftreifens 10 wird durch den Richtungspfeil angedeutet. Es ist klar zu erkennen, wie die Festigkeitsträger 28 im ersten Seitenbereich 14a und im zweiten Seitenbereich 16a mit der Umlaufrichtung einen Winkel von 90° einschließen, d.h. orthogonal zu dieser verlaufen. Im Gegensatz hierzu verlaufen die Festigkeitsträger 28 im Zentralbereich 18a zwar weiterhin parallel zueinander, jedoch relativ zur Umlaufrichtung mit einem kleineren Winkel, wobei sie im gezeigten Beispiel mit der Umlaufrichtung einen Winkel von etwa 52° aufweisen.

### Bezugszeichenliste

- 10: Fahrzeugluftreifen
- 12: Reifenkarkasse
- 14a, 14b: erster Seitenbereich
- 16a, 16b: zweiter Seitenbereich
- 18a, 18b: Zentralbereich
- 20a, 20b: Karkasslage
- 22: Laufstreifen
- 24: Reifeninnenschicht
- 26: Dämpfungslage
- 28: Festigkeitsträger
- 30: Weitere Lage

## Patentansprüche

1. Fahrzeugluftreifen (10), umfassend:
a) eine Reifenkarkasse (12) mit einem ersten Seitenbereich (14a, 14b), einem zweiten Seitenbereich (16a, 16b) und einem dazwischen angeordneten Zentralbereich (18a, 18b), umfassend zumindest eine Karkasslage (20a, 20b) mit einer Vielzahl von gummierten Festigkeitsträgern (28), die sich jeweils durch den ersten Seitenbereich (14a, 14b), den zweiten Seitenbereich (16a, 16b) und den Zentralbereich (18a, 18b) der Reifenkarkasse (12) erstrecken,
b) einen relativ zur Reifenkarkasse (12) radial außenliegenden Laufstreifen (22),
c) eine relativ zur Reifenkarkasse (12) radial innenliegende Reifeninnenschicht (24), und
d) eine relativ zur Reifenkarkasse (12) radial innenliegende Dämpfungslage (26), umfassend einen Gummiwerkstoff, wobei die Dämpfungslage (26) zwischen der Reifenkarkasse (12) und der Reifeninnenschicht (24) angeordnet ist, oder wobei die Dämpfungslage (26) auf der radial innenliegenden Seite der Reifeninnenschicht (24) angeordnet ist,
**dadurch gekennzeichnet, dass** der Laufstreifen (22) unmittelbar auf der radial außenliegenden Seite der Reifenkarkasse (12) angeordnet ist,
wobei zumindest ein Teil der gummierten Festigkeitsträger (28) der Karkasslage (20a, 20b) bezogen auf die Umfangsrichtung des Fahrzeugluftreifens (10) im ersten Seitenbereich (14a, 14b) und im zweiten Seitenbereich (16a, 16b) einen Winkel im Bereich von 80° bis 90° und im Zentralbereich (18a, 18b) einen Winkel im Bereich von 5° bis 75° aufweist.

2. Fahrzeugluftreifen (10) nach Anspruch 1, wobei zumindest ein Teil der gummierten Festigkeitsträger (28) der Karkasslage (20a, 20b) bezogen auf die Umfangsrichtung des Fahrzeugluftreifens (10) im ersten Seitenbereich (14a, 14b) und im zweiten Seitenbereich (16a, 16b) einen Winkel im Bereich von 85° bis 90°, bevorzugt im Bereich von 88° bis 90°, aufweist.

3. Fahrzeugluftreifen (10) nach einem der Ansprüche 1 oder 2, wobei zumindest ein Teil der gummierten Festigkeitsträger (28) der Karkasslage (20a, 20b) bezogen auf die Umfangsrichtung des Fahrzeugluftreifens (10) im Zentralbereich (18a, 18b) einen Winkel im Bereich von 10° bis 70°, bevorzugt im Bereich von 15° bis 55°, besonders bevorzugt im Bereich von 20° bis 35°, aufweist.

4. Fahrzeugluftreifen (10) nach einem der Ansprüche 1 bis 3, wobei die Dämpfungslage (26) in radial nach außen weisender Richtung zumindest teilweise, bevorzugt vollständig, unterhalb des Zentralbereichs (18a, 18b) angeordnet ist.

5. Fahrzeugluftreifen (10) nach einem der Ansprüche 1 bis 4, wobei der Laufstreifen (22) in radial nach außen weisender Richtung zumindest teilweise, bevorzugt vollständig, oberhalb des Zentralbereichs (18a, 18b) angeordnet ist.

6. Fahrzeugluftreifen (10) nach einem der Ansprüche 1 bis 5, wobei der Quotient gebildet aus der Breite der Aufstandsfläche geteilt durch die Breite des Zentralbereichs (18a, 18b), jeweils quer zur Umfangsrichtung des Fahrzeugluftreifens (10), im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt, und/oder wobei der Quotient gebildet aus der Breite der Dämpfungslage (26) geteilt durch die Breite des Zentralbereichs (18a, 18b), jeweils quer zur Umfangsrichtung des Fahrzeugluftreifens (10), im Bereich von 0,6 bis 1,4, bevorzugt im Bereich von 0,7 bis 1,2, besonders bevorzugt im Bereich von 0,8 bis 1,1, ganz besonders bevorzugt im Bereich von 0,9 bis 1,0, liegt.

7. Fahrzeugluftreifen (10) nach einem der Ansprüche 1 bis 6, wobei der Gummiwerkstoff der Dämpfungslage (26) einen E-Modul im Bereich von 2 bis 15 MPa, bevorzugt im Bereich von 3 bis 12 MPa, besonders bevorzugt im Bereich von 4 bis 8 MPa, aufweist.

8. Fahrzeugluftreifen (10) nach einem der Ansprüche 1 bis 7, wobei die Reifenkarkasse (12) zwei oder mehr Karkasslagen (20a, 20b) umfasst, wobei in jeder Karkasslage (20a, 20b) zumindest ein Teil der gummierten Festigkeitsträger (28), bevorzugt sämtliche gummierten Festigkeitsträger (28), bezogen auf die Umfangsrichtung des Fahrzeugluftreifens (10) im ersten Seitenbereich (14a, 14b) und im zweiten Seitenbereich (16a, 16b) einen Winkel im Bereich von 80° bis 90° und im Zentralbereich (18a, 18b) einen Winkel im Bereich von 5° bis 75° aufweist.

9. Fahrzeugluftreifen (10) nach Anspruch 8, wobei die Reifenkarkasse (12) zwei Karkasslagen (20a, 20b) umfasst, wobei die gummierten Festigkeitsträger (28) der beiden Karkasslagen (20a, 20b) im Zentralbereich (18a, 18b) relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, aufweisen.

## Claims

1. Pneumatic vehicle tyre (10), comprising:
a) a tyre carcass (12) having a first side region (14a, 14b), a second side region (16a, 16b) and a central region (18a, 18b) arranged in between, comprising at least one carcass ply (20a, 20b) having a multiplicity of rubberized strength members (28), which each extend through the first side region (14a, 14b), the second side region (16a, 16b) and the central region (18a, 18b) of the tyre carcass (12),
b) a tread (22) which is situated radially at the outside relative to the tyre carcass (12),
b) a tyre inner layer (24) which is situated radially at the inside relative to the tyre carcass (12), and
d) a damping ply (26) which is situated radially at the inside relative to the tyre carcass (12) and which comprises a rubber material, wherein the damping ply (26) is arranged between the tyre carcass (12) and the tyre inner layer (24), or wherein the damping ply (26) is arranged on the side radially at the inside of the tyre inner layer (24),
**characterized in that** the tread (22) is arranged directly on the side radially at the outside of the tyre carcass (12),
wherein at least a proportion of the rubberized strength members (28) of the carcass ply (20a, 20b) have, in the first side region (14a, 14b) and in the second side region (16a, 16b), an angle in the range of 80° to 90°, and in the central region (18a, 18b), an angle in the range of 5° to 75°, in relation to the circumferential direction of the pneumatic vehicle tyre (10).

2. Pneumatic vehicle tyre (10) according to Claim 1, wherein at least a proportion of the rubberized strength members (28) of the carcass ply (20a, 20b) have, in the first side region (14a, 14b) and in the second side region (16a, 16b), an angle in the range of 85° to 90°, preferably in the range of 88° to 90°, in relation to the circumferential direction of the pneumatic vehicle tyre (10).

3. Pneumatic vehicle tyre (10) according to either of Claims 1 and 2, wherein at least a proportion of the rubberized strength members (28) of the carcass ply (20a, 20b) have, in the central region (18, 18b), an angle in the range of 10° to 70°, preferably in the range of 15° to 55°, particularly preferably in the range of 20° to 35°, in relation to the circumferential direction of the pneumatic vehicle tyre (10).

4. Pneumatic vehicle tyre (10) according to any one of Claims 1 to 3, wherein the damping ply (26) in the radially outwardly facing direction is at least partially, preferably completely, arranged below the central region (18a, 18b).

5. Pneumatic vehicle tyre (10) according to any one of Claims 1 to 4, wherein the tread (22) in the radially outwardly facing direction is at least partially, preferably completely, above the central region (18a, 18b).

6. Pneumatic vehicle tyre (10) according to any one of Claims 1 to 5, wherein the quotient formed from the width of the contact surface divided by the width of the central region (18a, 18b) lies in the range of 0.7 to 2, preferably in the range of 0.8 to 1.6, particularly preferably in the range of 0.9 to 1.2, very particularly preferably in the range of 0.95 to 1.05, in each case transversely to the circumferential direction of the pneumatic vehicle tyre (10), and/or wherein the quotient formed from the width of the damping ply (26) divided by the width of the central region (18a, 18b) lies in the range of 0.6 to 1.4, preferably in the range of 0.7 to 1.2, particularly preferably in the range of 0.8 to 1.1, very particularly preferably in the range of 0.9 to 1.0, in each case transversely to the circumferential direction of the pneumatic vehicle tyre (10).

7. Pneumatic vehicle tyre (10) according to any one of Claims 1 to 6, wherein the rubber material of the damping ply (26) has a modulus of elasticity in the range of 2 to 15 MPa, preferably in the range of 3 to 12 MPa, particularly preferably in the range of 4 to 8 MPa.

8. Pneumatic vehicle tyre (10) according to any one of Claims 1 to 7, wherein the tyre carcass (12) comprises two or more carcass plies (20a, 20b), wherein in each carcass ply (20a, 20b) at least a proportion of the rubberized strength members (28), preferably all of the rubberized strength members (28) have, in the first side region (14a, 14b) and in the second side region (16a, 16b), an angle in the range of 80° to 90°, and, in the central region (18a, 18b), an angle in the range of 5° to 75°, in relation to the circumferential direction of the pneumatic vehicle tyre (10).

9. Pneumatic vehicle tyre (10) according to Claim 8, wherein the tyre carcass (12) comprises two carcass plies (20a, 20b), wherein the rubberized strength members (28) of the two carcass plies (20a, 20b) have, in the central region (18a, 18b), an angle in the range of 30° to 90°, preferably in the range of 40° to 80°, particularly preferably in the range of 50° to 70°, very particularly preferably in the range of 55° to 65°, relative to each other.

## Revendications

1. Pneumatique de véhicule (10), comprenant :
a) une carcasse de pneu (12) avec une première zone latérale (14a, 14b), une deuxième zone latérale (16a, 16b) et une zone centrale (18a, 18b) agencée entre celles-ci, comprenant au moins une couche de carcasse (20a, 20b) avec une pluralité de supports de résistance caoutchoutés (28) qui s'étendent respectivement à travers la première zone latérale (14a, 14b), la deuxième zone latérale (16a, 16b) et la zone centrale (18a, 18b) de la carcasse de pneu (12),
b) une bande de roulement (22) radialement externe par rapport à la carcasse de pneu (12),
c) une couche intérieure de pneu (24) située radialement à l'intérieur par rapport à la carcasse de pneu (12), et
d) une couche d'amortissement (26) située radialement à l'intérieur par rapport à la carcasse de pneu (12), la couche d'amortissement (26) étant agencée entre la carcasse de pneu (12) et la couche intérieure de pneu (24), ou la couche d'amortissement (26) étant agencée sur le côté radialement intérieur de la couche intérieure de pneu (24),
**caractérisé en ce que** la bande de roulement (22) est agencée directement sur le côté radialement extérieur de la carcasse de pneu (12),
au moins une partie des supports de résistance caoutchoutés (28) de la couche de carcasse (20a, 20b) présentant, par rapport à la direction circonférentielle du pneumatique de véhicule (10), un angle dans la plage de 80° à 90° dans la première zone latérale (14a, 14b) et dans la deuxième zone latérale (16a, 16b), et un angle dans la plage de 5° à 75° dans la zone centrale (18a, 18b).

2. Pneumatique de véhicule (10) selon la revendication 1, au moins une partie des supports de résistance caoutchoutés (28) de la couche de carcasse (20a, 20b) présentant, par rapport à la direction circonférentielle du pneumatique de véhicule (10), un angle dans la plage de 85° à 90°, de préférence dans la plage de 88° à 90°, dans la première zone latérale (14a, 14b) et dans la deuxième zone latérale (16a, 16b).

3. Pneumatique de véhicule (10) selon l'une quelconque des revendications 1 ou 2, au moins une partie des supports de résistance caoutchoutés (28) de la couche de carcasse (20a, 20b) présentant, par rapport à la direction circonférentielle du pneumatique de véhicule (10), un angle dans la plage de 10° à 70°, de préférence dans la plage de 15° à 55°, de manière particulièrement préférée dans la plage de 20° à 35°, dans la zone centrale (18a, 18b).

4. Pneumatique de véhicule (10) selon l'une quelconque des revendications 1 à 3, la couche d'amortissement (26) étant agencée dans une direction radiale vers l'extérieur au moins partiellement, de préférence complètement, en dessous de la zone centrale (18a, 18b).

5. Pneumatique de véhicule (10) selon l'une quelconque des revendications 1 à 4, la bande de roulement (22) étant agencée dans une direction radiale vers l'extérieur au moins partiellement, de préférence complètement, au-dessus de la zone centrale (18a, 18b).

6. Pneumatique de véhicule (10) selon l'une quelconque des revendications 1 à 5, le quotient formé à partir de la largeur de la surface de contact divisée par la largeur de la zone centrale (18a, 18b), dans chaque cas transversalement à la direction circonférentielle du pneumatique de véhicule (10), étant dans la plage de 0,7 à 2, de préférence dans la plage de 0,8 à 1,6, de manière particulièrement préférée dans la plage de 0,9 à 1,2, de manière tout particulièrement préférée dans la plage de 0,95 à 1,05, et/ou
le quotient formé à partir de la largeur de la couche d'amortissement (26) divisée par la largeur de la zone centrale (18a, 18b), dans chaque cas transversalement à la direction circonférentielle du pneumatique de véhicule (10), étant dans la plage de 0,6 à 1,4, de préférence dans la plage de 0,7 à 1,2, de manière particulièrement préférée dans la plage de 0,8 à 1,1, de manière tout particulièrement préférée dans la plage de 0,9 à 1,0.

7. Pneumatique de véhicule (10) selon l'une quelconque des revendications 1 à 6, le matériau en caoutchouc de la couche d'amortissement (26) présentant un module d'élasticité dans la plage de 2 à 15 MPa, de préférence dans la plage de 3 à 12 MPa, de manière particulièrement préférée dans la plage de 4 à 8 MPa.

8. Pneumatique de véhicule (10) selon l'une quelconque des revendications 1 à 7, la carcasse de pneu (12) comprenant deux ou plus de deux couches de carcasse (20a, 20b) ; dans chaque couche de carcasse (20a, 20b) au moins une partie des supports de résistance caoutchoutés (28), de préférence tous les supports de résistance caoutchoutés (28), présentant, par rapport à la direction circonférentielle du pneumatique de véhicule (10), un angle dans la plage de 80° à 90° dans la première zone latérale (14a, 14b) et dans la deuxième zone latérale (16a, 16b) et un angle dans la plage de 5° à 75° dans la zone centrale (18a, 18b).

9. Pneumatique de véhicule (10) selon la revendication 8, la carcasse de pneu (12) comprenant deux couches de carcasse (20a, 20b), les supports de résistance caoutchoutés (28) des deux couches de carcasse (20a, 20b) présentant entre elles, dans la zone centrale (18a, 18b), un angle dans la plage de 30° à 90°, de préférence dans la plage de 40° à 80°, de manière particulièrement préférée dans la plage de 50° à 70°, et de manière tout particulièrement préférée dans la plage de 55° à 65°.
